# EUROPEAN PATENT APPLICATION

(11) **EP 4 067 032 A1**
(43) Date of publication of application: **05.10.2022**
(21) Application number: 20893499.2
(22) Date of filing: 20.11.2020
(51) Int. Cl.: B29B 9/06, C08J 9/12, C08J 9/16, B29B 7/48, B29B 7/88

(54) **MANUFACTURING DEVICE AND MANUFACTURING METHOD FOR THERMOPLASTIC RESIN FOAM PARTICLES**

(30) Priority: 27.11.2019 JP 2019214548
(71) Applicant: Kaneka Corporation, Osaka-shi, Osaka 530-8288 (JP)
(72) Inventor: SHIMODA, Mitsutaka, Settsu-shi, Osaka 566-0072 (JP); TOBIMATSU, Yuki, Settsu-shi, Osaka 566-0072 (JP)
(74) Representative: Vossius & Partner Patentanwälte Rechtsanwälte mbB
(86) International application number: PCT/JP2020/043448
(87) International publication number: WO 2021/106795

(57) **Abstract**

In order to prevent thermoplastic resin expanded particles from adhering to each other in a production process and to obtain thermoplastic resin expanded particles having a high expanding ratio, a production method of the present invention includes a melting and kneading step of melting and kneading a thermoplastic resin and a carbonic acid gas which serves as a blowing agent, and a granulating step of granulating thermoplastic resin expanded particles by a hot cutting method. In the granulating step, mixture mist (M) containing water and air is sprayed toward die openings (6b) of a die (6), and a spray flow rate of the water by a mist nozzle (8) is 1 L/h to 9 L/h per nozzle.

## Description

### Technical Field

The present invention relates to a production method and a production device for producing thermoplastic resin expanded particles.

### Background Art

As a method for obtaining thermoplastic resin expanded particles, an extrusion expansion method is known.

In production using such an extrusion expansion method, first, a thermoplastic resin and a blowing agent are introduced to an extruder, then melted and kneaded, and then cooled to obtain an expandable molten resin (i.e., a molten resin containing the blowing agent). After that, the expandable molten resin (the molten resin containing the blowing agent) is extruded to a low-pressure region through a microporous die attached to an end of the extruder, and then the expandable molten resin thus extruded is shredded to obtain thermoplastic resin expanded particles. An extrusion expansion method in which a carbonic acid gas that imposes a reduced environmental load is used as the blowing agent exhibits lower gas retention property in expansion, as compared with an extrusion expansion method using an organic blowing agent. Therefore, it is particularly difficult to obtain expanded particles having a high expanding ratio with the extrusion expansion method using a carbonic acid gas.

In the extrusion expansion method, a shredding method for obtaining expanded particles is roughly classified into a cold cutting method and a die face cutting method. The cold cutting method includes a method in which (i) a molten resin that contains a blowing agent and has been extruded from a microporous die is expanded and (ii) strands of expanded resin thus obtained are taken while being cooled in a water tank and are then shredded (strand cut method). The die face cutting method is a method in which a molten resin which has been extruded from a microporous die is cut with use of a cutter which rotates while being in contact with a die surface or while securing a small gap with respect to the die surface.

The die face cutting method is further classified into the following three methods on the basis of a difference in cooling method: an underwater cutting (hereinafter sometimes referred to as "UWC") method; a watering cutting (hereinafter sometimes referred to as "WRC") method; and a hot cutting (hereinafter sometimes referred to as "HC") method. The UWC method is a method in which (i) a chamber attached to a leading end of a die is filled with a cooling water, which has been adjusted to have a predetermined pressure, so that the cooling water is in contact with a resin discharge surface of the die and (ii) a molten resin which has been extruded from the microporous die is cut in water. The WRC method is a method in which a cooling drum having an inner peripheral surface along which cooling water flows is connected to the downstream side of the die, and a molten resin which has been cut with a cutter in air is cooled by the cooling water while being expanded or after being expanded. The UWC method and the WRC method are characterized in that the cooling water is used also to transfer the resin to a water separator while cooling the resin.

The HC method does not employ the manner in which cooling water that flows in a cooling drum is used to transfer a resin while cooling the resin, unlike the WRC method. In the HC method, a molten resin which has been cut with a cutter in air is cooled in air while being expanded or after being expanded. Moreover, expanded particles are typically transferred by air transportation.

For example, in a technique disclosed in Patent Literature 1, a hot cutting pelletizer for an HC method is used. The hot cutting pelletizer disclosed in Patent Literature 1 is used to pelletize an unexpanded thermoplastic resin in an appropriate size. Patent Literature 2 discloses a method for producing a thermoplastic resin with a WRC method.

Patent Literatures 3 and 4 each disclose a technique to produce thermoplastic resin expanded particles with a UWC method.

### Citation List

### [Patent Literature]

[Patent Literature 1] Japanese Patent Application Publication Tokukaihei No. 6-170839
[Patent Literature 2] Japanese Patent No. 3671128
[Patent Literature 3] PCT International Publication No. WO2009/104671
[Patent Literature 4] Japanese Patent Application Publication Tokukai No. 2011-202077

### Summary of Invention

### Technical Problem

In a case where thermoplastic resin expanded particles are produced with the HC method as disclosed in Patent Literature 1 or the WRC method as disclosed in Patent Literature 2, there is a problem that expanded particles adhere to each other in a production process. Meanwhile, in a case where thermoplastic resin expanded particles are produced with the UWC method as disclosed in Patent Literature 3 or 4 with use of a carbonic acid gas as a blowing agent, it is difficult to obtain expanded particles having a high expanding ratio.

That is, a conventional method is a method for producing thermoplastic resin pellets. The thermoplastic resin pellets basically fall downward due to strong influence of gravity. Meanwhile, the thermoplastic resin expanded particles have small density, and are therefore strongly affected by wind which is generated in a cutter case. Therefore, a residence time of the thermoplastic resin expanded particles in the cutter case increases. As a result, expanded particles collide with each other again and again, and are thus more likely to adhere to each other. Furthermore, static electricity is also more likely to occur, and therefore the expanded particles are agglutinated together by the static electricity, and accordingly the expanded particles are more likely to adhere to each other. It is therefore difficult, with the conventional method, to prevent thermoplastic resin expanded particles from adhering to each other in the production process, and to obtain thermoplastic resin expanded particles having a high expanding ratio.

An object of an aspect of the present invention is to prevent thermoplastic resin expanded particles from adhering to each other in a production process, and to obtain thermoplastic resin expanded particles having a high expanding ratio.

### Solution to Problem

In order to attain the object, a production method in accordance with an aspect of the present invention is a method for producing thermoplastic resin expanded particles, the method including: a melting and kneading step of melting and kneading a thermoplastic resin and a carbonic acid gas which serves as a blowing agent; and a granulating step of granulating thermoplastic resin expanded particles by a hot cutting method, in the hot cutting method, a molten resin that contains the thermoplastic resin and the blowing agent being extruded through a die hole, the molten resin which is extruded through the die hole being cut with a cutter in air, and the molten resin being cooled in air while being expanded or after being expanded, in the granulating step, mixture mist containing water and air being sprayed toward the die hole, and a spray flow rate of the water sprayed from a nozzle being 1 L/h to 9 L/h per nozzle.

A production device in accordance with an aspect of the present invention is a production device for producing thermoplastic resin expanded particles, the production device including: an extruder for melting and kneading a thermoplastic resin and a carbonic acid gas which serves as a blowing agent; a die having a die hole through which a molten resin, which contains the thermoplastic resin and the blowing agent, passes when the molten resin is extruded from the extruder; and a granulation section for granulating thermoplastic resin expanded particles by a hot cutting method, the granulation section including a cutter for cutting the molten resin, which has passed through the die hole, in air, the production device being provided with at least one spray opening from which water is sprayed, and the spray opening being provided so as to face the die hole.

### Advantageous Effects of Invention

According to an aspect of the present invention, it is possible to prevent thermoplastic resin expanded particles from adhering to each other in a production process, and to obtain thermoplastic resin expanded particles having a high expanding ratio.

### Brief Description of Drawings

Fig. 1 is a diagram schematically illustrating a configuration of a production device for producing thermoplastic resin expanded particles, in accordance with an embodiment of the present invention.
In Fig. 2, 2010 is a front view illustrating an internal configuration of a granulation section in the production device illustrated in Fig. 1, and 2010 is a front view schematically illustrating a positional relation between a mist nozzle and a die.

### Description of Embodiments

All literatures described in this specification are incorporated herein as reference literatures. Any numerical range "A to B" expressed in the present specification intends to mean "not less than A and not more than B".

### <Production device for expandable thermoplastic resin particles>

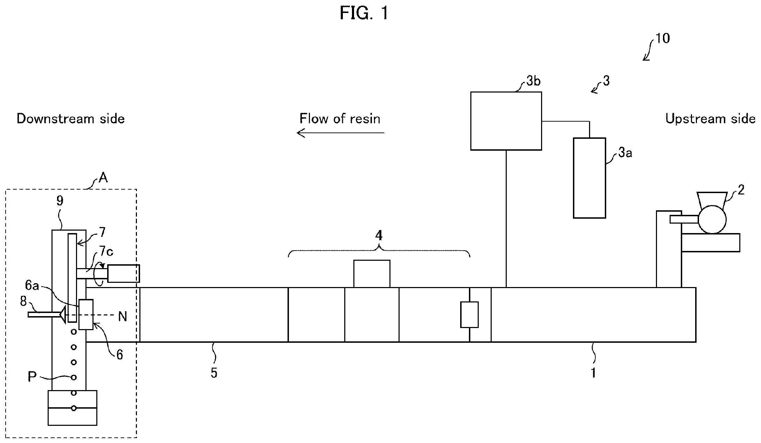

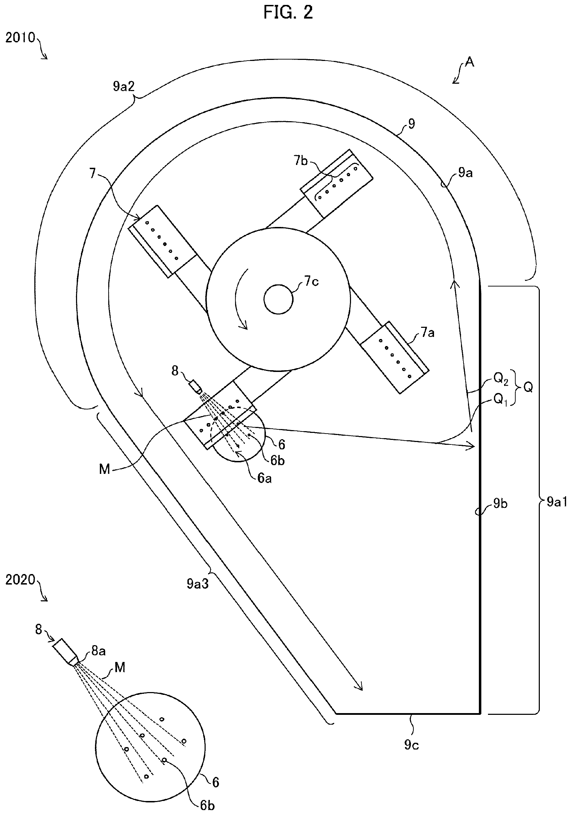

The description below deals with an embodiment of the present invention in detail. Fig. 1 is a diagram schematically illustrating a configuration of a production device 10 for producing thermoplastic resin expanded particles, in accordance with the present embodiment. In Fig. 2, 2010 is a front view illustrating an internal configuration of a granulation section A in the production device 10. The production device 10 is a device which extrudes a molten resin (hereinafter, sometimes simply referred to as "molten resin") containing a thermoplastic resin and a carbonic acid gas which serves as a blowing agent, cuts the molten resin in air, and thus granulates thermoplastic resin expanded particles.

As illustrated in Fig. 1, the production device 10 includes an extruder 1 for extruding a molten resin, a feeder 2, a blowing agent introduction unit 3, a transportation section 4, a cooling section 5, and a granulation section A. The feeder 2 and the blowing agent introduction unit 3 are connected to the extruder 1. The extruder 1, the transportation section 4, the cooling section 5, and the granulation section A are linked to each other. The extruder 1, the transportation section 4, the cooling section 5, and the granulation section A are arranged in this order from the upstream side to the downstream side in an extruding direction of a molten resin. In the production device 10, the transportation section 4 can be omitted, provided that a resin pressure in a pipe from the extruder 1 to the granulation section A is sufficiently low. The positions of the transportation section 4 and the cooling section 5 can be interchanged in the arrangement order illustrated in Fig. 1. It is possible to provide transportation sections 4 on both the upstream side and the downstream side of the cooling section 5. In a case where a resin temperature is sufficiently decreased at an outlet of the extruder 1, the cooling section 5 can be omitted.

In the production device 10, (i) a raw material such as a thermoplastic resin is introduced to the extruder 1 via the feeder 2, and (ii) a blowing agent is introduced to the extruder 1 via the blowing agent introduction unit 3. The thermoplastic resin and the blowing agent is melted and kneaded in the extruder 1. Then, the melted and kneaded molten resin passes through the transportation section 4 and the cooling section 5, and reaches the granulation section A. Then, the molten resin is granulated in the granulation section A while being expanded, and thus expanded particles P are produced. Here, with respect to a flow of the molten resin from the extruder 1 to the granulation section A, the extruder 1 side is defined as the upstream side, and the granulation section A side is defined as the downstream side.

The extruder 1 used can be selected from conventionally known extruders as appropriate in accordance with a type or the like of a resin to be granulated. Examples of the extruder include an extruder using a screw. Examples of the extruder using a screw include a single screw extruder and a twin screw extruder. In a case where the single screw extruder is employed, it is possible to omit the feeder 2. In a case where the twin screw extruder is employed, the screws can rotate in the same direction or in different directions.

The feeder 2 is constituted by a member for introducing a thermoplastic resin. In Fig. 1, one feeder 2 is provided. Note, however, that the number of feeders 2 can be set as appropriate in accordance with characteristics, types, the number, and the like of raw materials of thermoplastic resin expanded particles.

The blowing agent introduction unit 3 is constituted by a member that introduces a blowing agent to a molten resin that is melted and kneaded in the extruder 1. More specifically, the blowing agent introduction unit 3 includes a blowing agent storage section 3a and a pump 3b. In the blowing agent introduction unit 3, a blowing agent stored in the blowing agent storage section 3a is introduced to the extruder 1 by the pump 3b. In a case where the blowing agent is a carbonic acid gas, the blowing agent storage section 3a is a carbonic acid gas bottle, and the pump 3b is a high-pressure pump.

The transportation section 4 is constituted by a transportation member for transporting a molten resin from the extruder 1 to the granulation section A. The transportation member can be a known transportation member that is used in an extrusion expansion method. Examples of the transportation member include a gear pump. The gear pump is a member useful for maintaining a flow pressure of a molten resin or for increasing the pressure as appropriate.

The cooling section 5 is constituted by a cooling member for cooling a molten resin which has been transported from the transportation section 4 (or from the extruder 1 if the transportation section 4 is omitted). The cooling member can be a known cooling member that is used in an extrusion expansion method. Examples of the cooling member include a single screw extruder, a static mixer, and the like. The molten resin is slowly cooled while being mixed by the single screw extruder or the static mixer at a low shear rate, and thus the molten resin is cooled to a predetermined temperature.

In the production device 10, the raw materials such as the thermoplastic resin introduced via the feeder 2 are melted and kneaded in the extruder 1. A barrel temperature for melting the raw material is not particularly limited, provided that the barrel temperature falls within a range that does not hinder the introduction of the blowing agent to the raw materials. If the thermoplastic resin is not melted at a location of the extruder 1 at which the blowing agent is introduced, the blowing agent may flow to the upstream side of the extruder 1. Therefore, it is preferable to set the barrel temperature such that the thermoplastic resin is completely melted and the blowing agent is not gasified due to a high resin temperature. For example, in a case where the thermoplastic resin is a polypropylene-based resin, the thermoplastic resin is preferably melted and kneaded at a barrel temperature of not lower than 180°C and not higher than 220°C.

A kneaded product melted at such a resin temperature is mixed with the blowing agent in the extruder 1 by the blowing agent introduction unit 3. Then, the molten resin containing the thermoplastic resin and the blowing agent is moved while being further kneaded, and passes through the transportation section 4 and the cooling section 5, and reaches the granulation section A. Then, the molten resin is granulated and expanded in the granulation section A, and thus expanded particles P are produced.

The granulation section A includes a die 6, a cutter 7, a mist nozzle 8, and a cutter case 9 (collection section). The cutter case 9 is a tubular-shaped housing that accommodates at least a cutter blade 7a of the cutter 7 and the mist nozzle 8. Figs. 1 and 2 illustrate the granulation section A of side cutting type. Note, however, that the granulation section A can be of center cutting type.

The granulation section A is configured to granulate a molten resin with the HC method, instead of the UWC method. Therefore, the inside of the cutter case 9 is not filled with water or the like.

The die 6 is provided at the most downstream side in the flow of the molten resin. The die 6 has a resin discharge surface 6a from which a molten resin extruded from the extruder 1 is discharged. In the resin discharge surface 6a, die openings 6b through which the molten resin extruded from the extruder 1 passes is formed.

The cutter 7 is a member for cutting a molten resin which has been discharged from the resin discharge surface 6a through the die openings 6b of the die 6. The cutter 7 has a plurality of cutter blades 7a, an air discharge opening 7b, and a rotation shaft 7c. The cutter blades 7a are provided on the downstream side of the rotation shaft 7c, and rotate about the rotation shaft 7c. The cutter blades 7a are configured to rotate while abutting on the resin discharge surface 6a of the die 6 or securing a small gap with respect to the resin discharge surface 6a.

The production device 10 illustrated in Figs. 1 and 2 is a device of side cutting type in which the rotation shaft 7c of the cutter 7 is not aligned with a central axis N of the die 6.

The air discharge opening 7b is provided behind the cutter blade 7a in a rotation direction of the cutter blade 7a. The air discharge opening 7b is configured to discharge air to the front of the cutter blade 7a in the rotation direction. With the configuration, in the granulation section A, air from the air discharge opening 7b is blown against a molten resin immediately after being cut with the cutter blade 7a. By thus providing the air discharge opening 7b, the molten resin is properly released from the cutter blade 7a immediately after being cut with the cutter blade 7a. The production device 10 can be provided with a water ejection opening instead of the air discharge opening 7b.

The mist nozzle 8 sprays cooling water against the resin discharge surface 6a of the die 6. In Fig. 2, 2020 is a front view schematically illustrating a positional relation between the mist nozzle 8 and the die 6. As illustrated in 2020 of Fig. 2, the mist nozzle 8 has at least one spray opening 8a for spraying water. The mist nozzle 8 is provided at a location for spraying against the resin discharge surface 6a of the die 6. That is, the spray opening 8a is provided so as to face the die openings 6b of the die 6. With the configuration, mixture mist M which contains water and air and is sprayed from the spray opening 8a pervades a space in the vicinity of the die openings 6b of the die 6.

It is possible to provide a single mist nozzle 8 or a plurality of mist nozzles 8, as long as cooling water is sprayed against the entire die openings 6b. A spray flow rate of the mist nozzle 8 per nozzle is 1 L/h to 9 L/h, preferably 3 L/h to 9 L/h, more preferably 3 L/h to 6 L/h. If the spray flow rate is lower than 1 L/h, expanded particles would not be sufficiently cooled, and the expanded particles are more likely to adhere to each other. If the spray flow rate is greater than 9 L/h, the die 6 would be excessively cooled, and the die openings 6b are more likely to be blocked by the molten resin.

An average spray particle size of the water is preferably 40 µm or less, more preferably 35 µm or less. If the average spray particle size is greater than 40 µm, the die 6 is more likely to be cooled, and the die openings 6b are more likely to be clogged with the molten resin. Accordingly, efficiency of cooling expanded particles would be deteriorated, and thus the expanded particles are more likely to adhere to each other. In view of average spray particle size, the mist nozzle 8 is preferably a two-fluid nozzle. For the two-fluid nozzle, water and air are introduced to the inside of the two-fluid nozzle. Then, mixture mist M containing the water and the air is generated inside the nozzle.

The cutter case 9 is a component which accommodates the cutter 7 and collects expanded particles P produced by the HC method. At a lower part of the cutter case 9, an outlet 9c through which the produced expanded particles P are discharged is provided.

A sidewall surface 9a of the cutter case 9 has an expanded particle collision region 9a1. More specifically, the sidewall surface 9a has the expanded particle collision region 9a1, a cylindrical side surface region 9a2, and a plane surface region 9a3. The cylindrical side surface region 9a2 is positioned between the expanded particle collision region 9a1 and the plane surface region 9a3. The expanded particle collision region 9a1 is a region for connecting an end of the cylindrical side surface region 9a2 with the outlet 9c. The plane surface region 9a3 is a region for connecting an end of the cylindrical side surface region 9a2 opposite to the expanded particle collision region 9a1 with the outlet 9c. The cylindrical side surface region 9a2 has a cylindrical side surface that extends along a rotational orbit of the cutter blades 7a. A central axis of the cylindrical side surface region 9a2 substantially conforms to the rotation shaft 7c.

To the expanded particle collision region 9a1, a non-bonding coating treatment has been applied. That is, a coating layer 9b is formed in the expanded particle collision region 9a1. The coating layer 9b is provided to prevent the expanded particles P from adhering to the expanded particle collision region 9a1. By the formation of the coating layer 9b, the expanded particles P do not adhere to the expanded particle collision region 9a1. A material constituting the coating layer 9b is not particularly limited, provided that the expanded particles P do not adhere to the material. Preferably, the material can be a fluorocarbon resin, polyether ether ketone, or silicone rubber.

The molten resin which has been transported to the granulation section A is extruded through the die openings 6b of the die 6. Then, the molten resin is discharged through the die openings 6b in the resin discharge surface 6a of the die 6, and cut with the cutter 7 into a granular form, and is thus granulated. Immediately after that, the granulated molten resin is released from the cutter blade 7a by air from the air discharge opening 7b. Then, the molten resin is expanded in an atmosphere at atmospheric pressure in the cutter case 9. As a result, expanded particles P which have been expanded at an expanding ratio that is demanded for a product are produced. The expanded particles P here encompass not only particles which have been expanded at an expanding ratio demanded as a product, but also particles which are about to be expanded after being cut with the cutter 7 in the granular form and particles which are being expanded.

The expanded particles P which have been cut with the cutter 7 are moved to the outlet 9c along a track Q indicated in Fig. 2 by an airflow generated by rotation of the cutter blades 7a. More specifically, the expanded particles P are moved from the cutter blade 7a to the expanded particle collision region 9a1 (track Q₁). Then, after colliding with the expanded particle collision region 9a1 (coating layer 9b), the expanded particles P are moved along the cylindrical side surface region 9a2 and the plane surface region 9a3 (track Q₂), and are then discharged from the outlet 9c to the outside of the production device 10.

According to the production device 10 in accordance with the present embodiment, the mist nozzle 8 is provided for spraying cooling water against the molten resin which has been cut with the cutter 7. Therefore, a space in which the expanded particles P immediately after being cut with the cutter 7 are present becomes an atmosphere having a mist concentration higher than that of the other space. As such, the cutter 7 is to cut the molten resin in the atmosphere having the higher mist concentration. Therefore, the mist adheres to the surface of the expanded particles P immediately after being cut. By gasification of mist adhered to the surface of the expanded particles P, surface solidification of the expanded particles P is facilitated. Therefore, the expanded particles P do not adhere to each other. Furthermore, the mist prevents the expanded particles P from agglutinating and adhering to each other due to static electricity.

As described above, according to the production device 10, the mist nozzle 8 is provided for spraying cooling water against the molten resin which has been cut with the cutter 7. This makes it possible to prevent the expanded particles P from adhering to each other.

In the production device 10, the molten resin is extruded from the die openings 6b, and is sequentially cut with the plurality of cutter blades 7a. Then, every time the molten resin is cut with the cutter blades 7a, expanded particles P collide with the expanded particle collision region 9a1 one after another. After the molten resin is cut with the cutter blades 7a, the expanded particles P collide with the expanded particle collision region 9a1 for an extremely short time (e.g., within 0.02 seconds). At a point in time of collision with the expanded particle collision region 9a1, the expanded particles P are not completely solidified. Therefore, an expanded particle P (sometimes referred to as "first expanded particle P") obtained by cutting with a certain cutter blade 7a collides with the expanded particle collision region 9a1, and then adheres to the expanded particle collision region 9a1 and remains in the expanded particle collision region 9a1. Then, while the first expanded particle P remains in the expanded particle collision region 9a1, an expanded particle P (sometimes referred to as "second expanded particle P") obtained by cutting with a next cutter blade 7a comes into contact with the first expanded particle P. Thus, the first expanded particle P and the second expanded particle P adhere to each other. As such, when a molten resin is cut sequentially with the plurality of cutter blades 7a, expanded particles P would adhere to each other in the expanded particle collision region 9a1.

In order to avoid the above case, in the production device 10, the coating layer 9b is formed in the expanded particle collision region 9a1 with which expanded particles P are to collide immediately after being cut with the cutter 7. The coating layer 9b prevent the expanded particles P from adhering to the expanded particle collision region 9a1 even in a state in which the expanded particles P are not completely solidified. With the configuration, an expanded particle P (first expanded particle P) obtained by cutting with a certain cutter blade 7a collides with the expanded particle collision region 9a1, and then moves along the track Q₂ without remaining in the expanded particle collision region 9a1. Before an expanded particle P (second expanded particle P) obtained by cutting with a next cutter blade 7a collides with the expanded particle collision region 9a1, the first expanded particle P moves away from the expanded particle collision region 9a1. As a result, it is possible to prevent the first expanded particle P and the second expanded particle P from adhering to each other. As such, even when a molten resin is cut sequentially with the plurality of cutter blades 7a, expanded particles P do not adhere to each other.

In the configuration illustrated in Fig. 2, the coating layer 9b is formed only in the expanded particle collision region 9a1. However, the coating layer 9b is not limited to the configuration illustrated in Fig. 2, provided that the coating layer 9b is provided at least on a surface (expanded particle collision region 9a1) with which expanded particles P are to collide immediately after being cut. The coating layer 9b only needs to be formed in a region including the expanded particle collision region 9a1, and can be formed on the entire sidewall surface 9a.

As the coating layer 9b, it is possible to use various kinds of known coating materials, provided that adhesion of expanded particles P can be prevented. The coating material is not particularly limited, and can be, for example, a fluorocarbon resin, polyether ether ketone, silicone rubber, or the like.

In the configuration illustrated in Fig. 2, the expanded particle collision region 9a1 is a plane surface. Note, however, that a surface constituted by the expanded particle collision region 9a1 is not limited to the plane surface, provided that expanded particles P can collide with the surface, and the expanded particles P can move away from points at which the expanded particles P have collided. A position of the expanded particle collision region 9a1 in the cutter case 9 can be set as appropriate in accordance with a positional relation between the die openings 6b of the die 6 and the cutter 7, or the like.

The production device 10 illustrated in Figs. 1 and 2 is a side cutting type device. However, the configuration of the production device 10 in accordance with the present embodiment is not particularly limited, provided that the configuration is applicable to the HC method. The production device 10 can be a center cutting type device.

In the center cutting type device, the rotation shaft 7c of the cutter 7 is provided so as to conform to the central axis N of the die 6. Therefore, in the resin discharge surface 6a of the die 6, the die openings 6b are formed around the central axis N. For example, in a case where the die openings 6b are provided so as to fully surround the central axis N while keeping a uniform distance from the central axis N, expanded particles obtained by cutting with the cutter 7 move in all directions with respect to the central axis N. Therefore, in this case, the expanded particle collision region 9a1 is formed on the entire sidewall surface 9a of the cutter case 9.

The expanding ratio of the expanded particles P is 9 to 45 times. That is, the production device 10 is suitable for producing expanded particles P having the expanding ratio of 9 to 45 times. As described above, the granulation section A is configured to granulate a molten resin with the hot cutting method, instead of the UWC method. That is, after the molten resin is cut with the cutter 7, the expanded particles P are not released to water but are released to an atmosphere at atmospheric pressure. Therefore, as compared with the UWC method, it is possible to produce the expanded particles P having the higher expanding ratio, i.e., 9 to 45 times. The expanding ratio of the expanded particles P is 9 to 45 times, more preferably 15 to 45 times. If the expanding ratio is low, i.e., less than 9 times, a molten resin becomes less prone to solidification, and it is impossible to prevent expanded particles from adhering to each other. Note that the term "expanding ratio" does not mean an expanding ratio of expanded particles P during expansion after being cut with the cutter 7, but means an expanding ratio demanded as a product.

As such, according to the production device 10 in accordance with the present embodiment, it is possible to prevent expanded particles P from adhering to each other in a production process, and to obtain expanded particles P having a high expanding ratio.

### <Raw materials for expanded particles P>

In the present embodiment, as raw materials for producing the expanded particles P (hereinafter may also be referred to simply as "expanded particles"), in addition to the thermoplastic resin and the carbonic acid gas as a blowing agent, various additives can be added as necessary. Examples of the additives include flame retardants, thermal stabilizers, radical generators, processing aids, weathering stabilizers, nucleating agents, expansion aids, antistatic agents, radiative heat transfer inhibitors, colorants, and the like. These additives may be used alone or in combination of two or more thereof.

Further, the thermoplastic resin used in the present embodiment is not particularly limited, as long as it is a generally known thermoplastic resin having expandability. In expansion using a carbonic acid gas, the production method in accordance with the present embodiment can be suitably applied to a thermoplastic resin having a low retention property with respect to the carbonic acid gas. In view of this, the thermoplastic resin used in the present embodiment is preferably a crystalline thermoplastic resin. Examples of such a thermoplastic resin include a polyolefin-based resin, a polyester-based resin, a polyphenylene ether-based resin, a polyamide-based resin, polycarbonate-based resin, and mixtures thereof. The thermoplastic resin is more preferably a polyolefin-based resin or a polyester-based resin.

Examples of the polyester-based resin include aliphatic polyester resins, aromatic polyester resins, and aliphatic-aromatic polyester resins. Specific examples of the polyester-based resin include polyhydroxyalkanoates, polybutylene succinate (PBS), poly(butylene adipate-co-butylene terephthalate) (PBAT), polyethylene terephthalate (PET), and polybutylene terephthalate (PBT). Furthermore, examples of the polyhydroxyalkanoates include at least one type selected from the group consisting of poly(3-hydroxybutyrate-co-3-hydroxyhexanoate) (PHBH), poly(3-hydroxybutyrate) (P3HB), poly(3-hydroxybutyrate-co-3-hydroxyvalerate) (PHBV), poly(3-hydroxybutyrate-co-4-hydroxybutyrate) (P3HB4HB), poly(3-hydroxybutyrate-co-3-hydroxyoctanoate), and poly(3-hydroxybutyrate-co-3-hydroxyoctadecanoate).

The polyolefin-based resin is not particularly limited, and examples thereof include polypropylene-based resins. The polypropylene-based resin can be a general-purpose linear polypropylene-based resin or can be alternatively a modified polypropylene-based resin having a branched structure or a high-molecular-weight component. The modified polypropylene-based resin is produced by, for example, irradiating the linear polypropylene-based resin (hereinafter, also referred to as "raw material polypropylene-based resin") with a radial ray or melting and mixing the linear polypropylene-based resin, a conjugated diene compound, and a radical polymerization initiator. According to the present embodiment, the modified polypropylene-based resin having a branched structure is particularly preferable as the polypropylene-based resin, and the modified polypropylene-based resin which is obtained by melting and mixing the linear polypropylene-based resin, the conjugated diene compound, and the radical polymerization initiator is preferable because such a modified polypropylene-based resin is easily produced and is economically advantageous.

Examples of the linear polypropylene-based resin which can be used in the present embodiment encompass homopolymers, block copolymers, and random copolymers of propylene, each of which is a crystalline polymer. Such copolymers of propylene are each preferably a polymer containing propylene at a proportion of not less than 75% by weight, because such a polymer retains crystallinity, rigidity, chemical resistance, and the like, which are characteristics of a polypropylene-based resin. Examples of α-olefin which can be copolymerized with propylene encompass: α-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl- 1-butene, 1-heptene, 3-methyl-1-hexene, 1-octene, and 1-decene; cyclic olefin such as cyclopentene, norbornene, and tetracyclo[6,2,11,8,13,6]-4-dodecene; diene such as 5-methylene-2-norbornene, 5-ethylidene-2-norbornene, 1,4-hexadiene, methyl-1,4-hexadiene, and 7-methyl-1,6-octadiene; and vinyl monomers such as vinyl chloride, vinylidene chloride, acrylonitrile, vinyl acetate, acrylic acid, methacrylic acid, maleic acid, ethyl acrylate, butyl acrylate, methyl methacrylate, maleic anhydride, styrene, methylstyrene, vinyltoluene, and divinylbenzene. Particularly, ethylene and 1-butene are preferable due to their improved resistance to brittleness at low temperature, inexpensiveness, and the like. Each of those α-olefins can be used solely. Alternatively, two or more of those α-olefins can be used in combination.

Out of those polymers, in view of (i) moldability, during in-mold molding, of expanded particles to be obtained and (ii) physical properties of a molded product to be obtained, the random copolymers are preferable, and a propylene/ethylene/1-butene random copolymer or a propylene/ethylene random copolymer is more preferable.

The modified polypropylene-based resin which can be used in the present embodiment is preferably a modified polypropylene-based resin obtained by melting and mixing the linear polypropylene-based resin, the conjugated diene compound, and the radical polymerization initiator.

Examples of the conjugated diene compound encompass butadiene, isoprene, 1,3-heptadiene, 2,3-dimethylbutadiene, and 2,5-dimethyl-2,4-hexadiene. Each of those conjugated diene compounds can be used solely. Alternatively, two or more of those conjugated diene compounds can be used in combination. Out of those conjugated diene compounds, butadiene and isoprene are particularly preferable because butadiene and isoprene are inexpensive, easy to handle, and uniformly reacted.

The conjugated diene compound is added in an amount of preferably not less than 0.01 parts by weight and not more than 20 parts by weight, more preferably not less than 0.05 parts by weight and not more than 5 parts by weight, with respect to 100 parts by weight of the linear polypropylene-based resin. If the amount of the conjugated diene compound is less than 0.01 parts by weight, an effect of modification is difficult to achieve. If the amount of the conjugated diene compound is more than 20 parts by weight, the effect becomes saturated. This may be economically disadvantageous.

A monomer which can be copolymerized with the conjugated diene compound can be used in combination. Examples of the monomer encompass: acrylic ester such as vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, methyl acrylate, ethyl acrylate, butyl acrylate, 2-ethylhexyl acrylate, and stearyl acrylate; and methacrylic ester such as methyl methacrylate, ethyl methacrylate, butyl methacrylate, 2-ethylhexyl methacrylate, and stearyl methacrylate.

Examples of the radical polymerization initiator typically encompass peroxide and azo compounds. Preferably, the radical polymerization initiator is an initiator having ability to abstract hydrogen from the polypropylene-based resin and/or the conjugated diene compound. Examples of such an initiator typically encompass organic peroxide such as ketone peroxide, peroxy ketal, hydroperoxide, dialkyl peroxide, diacyl peroxide, peroxy dicarbonate, and peroxy ester. Out of those initiators, an initiator having high hydrogen abstraction ability is particularly preferable. Examples of such an initiator encompass: peroxy ketal such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxide such as dicumyl peroxide, 2,5-dimethyl-2,5-di(t-butyl peroxy)hexane, α,α'-bis(t-butyl peroxy-m-isopropyl)benzene, t-butyl cumyl peroxide, di-t-butyl peroxide, and 2,5-dimethyl-2,5-di(t-butyl peroxy)-3-hexyne; diacyl peroxide such as benzoyl peroxide; peroxy ester such as t-butyl peroxy octoate, t-butyl peroxy isobutyrate, t-butyl peroxy laurate, t-butyl peroxy 3,5,5-trimethylhexanoate, t-butyl peroxy isopropylcarbonate, 2,5-dimethyl-2,5-di(benzoyl peroxy)hexane, t-butyl peroxy acetate, t-butyl peroxy benzoate, and di-t-butyl peroxy isophthalate. Each of those radical polymerization initiators can be used solely. Alternatively, two or more of those radical polymerization initiators can be used in combination.

The radical polymerization initiator is added in an amount of preferably not less than 0.01 parts by weight and not more than 10 parts by weight, more preferably not less than 0.05 parts by weight and not more than 4 parts by weight, with respect to 100 parts by weight of the linear polypropylene-based resin. In a case where the amount of the radical polymerization initiator falls within the above range, it is possible to achieve effective modification of the resin. If the amount of the radical polymerization initiator is less than 0.01 parts by weight, the effect of the modification is difficult to achieve. If the amount of the radical polymerization initiator is more than 10 parts by weight, the effect of the modification becomes saturated. This may be economically disadvantageous.

Examples of a device for reacting the linear polypropylene-based resin, the conjugated diene compound, and the radical polymerization initiator encompass: a roller mill, a Ko-kneader, a Banbury mixer, a Brabender; kneaders such as a single screw extruder and a twin screw extruder; horizontal stirrers such as a twin screw surface renewal device and a twin screw multi-disk device; and vertical stirrers such as a double helical ribbon stirrer. Out of those devices, a kneader is preferably used, and an extruder such as the single screw extruder and the twin screw extruder is particularly preferable in view of productivity.

Order or a method of mixing and kneading (stirring) the linear polypropylene-based resin, the conjugated diene compound, and the radical polymerization initiator is not particularly limited. After the linear polypropylene-based resin, the conjugated diene compound, and the radical polymerization initiator are mixed together, they can be melted and kneaded (stirred). Alternatively, after the polypropylene-based resin is melted and kneaded (stirred), the conjugated diene compound and/or the radical initiator can be simultaneously or individually mixed with the polypropylene-based resin, either all at once or in portions. A temperature of the kneader (stirrer) is preferably not lower than 130°C and not higher than 300°C because the linear polypropylene-based resin melts but does not thermally decompose in such a range. Note that a preferable melting and kneading time is typically 1 minute to 60 minutes.

A shape and a size of the modified polypropylene-based resin thus obtained are not limited. The modified polypropylene-based resin can be in pellet form.

A melting point of the polypropylene-based resin in accordance with the present embodiment is preferably not lower than 130°C and not higher than 155°C, more preferably not lower than 135°C and not higher than 153°C, still more preferably not lower than 140°C and not higher than 150°C. In a case where the melting point of the polypropylene-based resin falls within the above range, dimensional stability and heat resistance of an in-mold foamed molded product are improved. Moreover, pressure of heating steam for in-mold foam molding of the expanded polypropylene-based resin particles in a mold becomes appropriate. If the melting point of the polypropylene-based resin is less than 130°C, the dimensional stability of the in-mold foamed molded product tends to be decreased or the heat resistance of the in-mold foamed molded product tends to be insufficient. If the melting point of the polypropylene-based resin is more than 155°C, the pressure of the heating steam for in-mold foam molding tends to become high.

Here, the melting point of the polypropylene-based resin is measured as follows with use of a differential scanning calorimeter DSC [for example, manufactured by Seiko Instruments Inc., model: DSC6200]. That is, 5 mg to 6 mg of the polypropylene-based resin is heated from 40°C to 220°C at a rate of 10°C/min so that the polypropylene-based resin is melted. The polypropylene-based resin is then cooled from 220°C to 40°C at a rate of 10°C/min so that the polypropylene-based resin is crystallized. Subsequently, the polypropylene-based resin is heated again from 40°C to 220°C at a rate of 10°C/min. A melting peak temperature shown in a DSC curve obtained after the second heating is regarded as the melting point.

The blowing agent used in the present embodiment is a carbonic acid gas. The carbonic acid gas is a preferable blowing agent because the carbonic acid gas is safely used and because required equipment specifications are simple. Furthermore, by using the carbonic acid gas as the blowing agent, it is possible to easily obtain an expanded product having a higher expanding ratio, as compared with other inorganic blowing agents such as nitrogen and water. An amount of the blowing agent varies depending on a type of the thermoplastic resin and a target expanding ratio of the expanded particles. Therefore, the amount of the blowing agent can be adjusted as appropriate. The blowing agent is added in an amount of preferably not less than 1 part by weight and not more than 20 parts by weight, more preferably not less than 1 part by weight and not more than 10 parts by weight, with respect to 100 parts by weight of the polypropylene-based resin.

A cell nucleating agent can be further added so as to control shapes of cells in the expanded particles. Examples of the cell nucleating agent encompass a sodium bicarbonate-citric acid mixture, monosodium citrate, talc, and calcium carbonate. Each of those cell nucleating agents can be used solely. Alternatively, two or more of those cell nucleating agents can be used in combination. An amount of the cell nucleating agent is not particularly limited. Typically, the cell nucleating agent is added in an amount of preferably not less than 0.01 parts by weight and not more than 5 parts by weight with respect to 100 parts by weight of the polypropylene-based resin.

Furthermore, a synthetic resin, other than the polypropylene-based resin, can be added to the polypropylene-based resin, and a resin thus obtained can be used as a base resin, provided that the synthetic resin does not impair the effect of the present invention. Examples of the synthetic resin other than the polypropylene-based resin encompass: ethylene-based resins such as high-density polyethylene, medium-density polyethylene, low-density polyethylene, linear low-density polyethylene, linear very-low-density polyethylene, an ethylene-vinyl acetate copolymer, an ethylene-acrylic acid copolymer, and an ethylene-methacrylic acid copolymer; and styrene-based resins such as polystyrene, a styrenemaleic anhydride copolymer, and a styrene-ethylene copolymer.

According to the present embodiment, an additive(s), such as a stabilizer (e.g., an antioxidant, a metal deactivator, a phosphorous processing stabilizer, a ultraviolet absorber, a ultraviolet stabilizer, a fluorescent brightening agent, metallic soap, and an antacid adsorbent), a crosslinking agent, a chain transfer agent, a nucleating agent, a lubricant, a plasticizer, a filler, a reinforcer, a pigment, a dye, a flame retardant, and/or an antistatic agent, can be added as necessary. Examples of the antacid adsorbent encompass magnesium oxide and hydrotalcite.

According to the present embodiment, there is no limitation on addition of a coloring agent. No coloring agent can be added so as to produce natural color. Alternatively, a blue coloring agent, a red coloring agent, a black coloring agent, and/or the like can be added so as to produce desired color. Examples of the coloring agent encompass a perylene-based organic pigment, an azo-based organic pigment, a quinacridone-based organic pigment, a phthalocyanine-based organic pigment, an indanthrenebased organic pigment, a dioxazine-based organic pigment, an isoindoline-based organic pigment, and carbon black.

A method of increasing the expanding ratio by pressuring insides of the polypropylene-based resin expanded particles with use of an inert gas and heating the polypropylene-based resin expanded particles (for example, a method disclosed in Japanese Patent Application Publication, Tokukaihei, No. 10-237212) can be employed for the expanded particles.

A weight of the expanded particles in accordance with the present embodiment is preferably not more than 3 mg/particle, more preferably not more than 2 mg/particle, because, in a case where the mold is filled with such expanded particles and the expanded particles are expanded, the expanded particles are easily formed into a molded product having beautiful appearance. A lower limit is not particularly limited, but is preferably not less than 0.3 mg/particle in view of productivity and the like.

A cell diameter of the expanded particles in accordance with the present embodiment is preferably 0.1 mm to 1.0 mm, more preferably 0.15 mm to 0.7 mm, because such expanded particles are expanded throughout the mold during in-mold foam molding and an in-mold foamed molded product to be obtained will little shrink.

The in-mold foamed molded product in accordance with the present embodiment is obtained by (i) filling the mold, which can be closed up but is not sealed up, with the expanded particles and (ii) heating the expanded particles by steam so that the expanded particles are molded.

In order that the in-mold foamed molded product is molded from the expanded particles in accordance with the present embodiment, any of the following methods can be, for example, employed: A) a method in which (i) expanded particles are pressured with use of an inorganic gas so that the expanded particles are impregnated with the inorganic gas and have given internal pressure, (ii) a mold is filled with the expanded particles, and (iii) the expanded particles are heated by steam or the like so as to be fused together (for example, Japanese Patent Publication, Tokukoushou, No. 51-22951); B) a method in which (i) expanded particles are compressed by gas pressure, (ii) a mold is filled with the expanded particles, and (iii) the expanded particles are heated by steam or the like so as to be fused together while compression recovery of the expanded particles is utilized (for example, Japanese Patent Publication, Tokukoushou, No. 53-33996); and C) a method in which (i) a mold whose gap is open is filled with expanded particles, (ii) the mold is closed, until the gap has a given width, so that the expand particles, with which the mold is filled, are compressed, and (iii) the expanded particles are heated by steam or the like so as to be fused together.

### <Method for producing thermoplastic resin expanded particles>

A method for producing thermoplastic resin expanded particles in accordance with the present embodiment includes: a melting and kneading step of melting and kneading a thermoplastic resin and a carbonic acid gas which serves as a blowing agent; and a granulating step of granulating thermoplastic resin expanded particles by a hot cutting method, in the hot cutting method, a molten resin that contains the thermoplastic resin and the blowing agent being extruded through a die hole, the molten resin which is extruded through the die hole being cut with a cutter in air, and the molten resin being cooled in air while being expanded or after being expanded, in the granulating step, mixture mist containing water and air being sprayed toward the die hole, and a spray flow rate of the water sprayed from a nozzle being 1 L/h to 9 L/h per nozzle. The production method in accordance with the present embodiment is not particularly limited, provided that the method includes the above features. For example, it is possible to employ a production method using the foregoing production device 10. The following description will discuss a method for producing thermoplastic resin expanded particles using the production device 10, with reference to Figs. 1 and 2.

First, in the production method in accordance with the present embodiment, a thermoplastic resin is introduced from the feeder 2 to the extruder 1. For example, in a case where a polypropylene-based resin is used as the thermoplastic resin, the polypropylene-based resin is melted at a barrel temperature of 200°C. Next, a blowing agent is added from the blowing agent introduction unit 3 to the extruder 1 (melting and kneading step). It is possible to introduce any of the foregoing additives other than the thermoplastic resin to the extruder 1 in accordance with type, characteristic, and the like of expanded particles to be produced. In such a case, the additive can be added simultaneously with the thermoplastic resin by blending the additive with the thermoplastic resin in advance and introducing the blend into the extruder 1. Alternatively, it is possible that an inlet different from the feeder 2 for introducing the thermoplastic resin to the extruder 1 is provided, and the additive is introduced to the extruder 1 via the inlet.

After a molten resin containing the thermoplastic resin and the blowing agent is thus melted and kneaded in the extruder 1, the molten resin is transported from the transportation section 4 to the cooling section 5. Then, the molten resin is cooled to an intended resin temperature in the cooling section 5, and then the molten resin is extruded through the die 6. According to the production method in accordance with the present embodiment, expanded particles P are granulated by a hot cutting method (granulating step). In the hot cutting method, the molten resin is extruded through the die openings 6b of the die 6, the molten resin which is being extruded through the die openings 6b of the die 6 is cut with the cutter 7 in air, and the molten resin is cooled in air while being expanded or after being expanded. More specifically, in accordance with the extrusion of the molten resin through the die 6, the cutter 7 is driven so that the cutter blades 7a rotate about the rotation shaft 7c. Then, the molten resin extruded from the die 6 is cut with the cutter 7. At this time, air or water is ejected from the cutter 7. For example, in order that the molten resin can be easily released from the cutter blade 7a after being cut with the cutter 7, air is discharged from the air discharge opening 7b. In this case, a linear speed of air is preferably 25 m/sec or more. If the linear speed of air is less than 25 m/sec, the thermoplastic resin expanded particles are less prone to being released from the cutter blade 7a, and the thermoplastic resin expanded particles are more likely to adhere to each other.

A pressure of the molten resin in the extruder 1 is kept constant by the transportation section 4. The pressure of the molten resin in the extruder 1 can be maintained at a pressure at which the blowing agent is not gasified. For example, in a case where the blowing agent is a carbonic acid gas, the pressure can be 10 MPa.

A temperature of the molten resin immediately before being extruded from the die 6 is lowered to an intended resin temperature by the cooling section 5. The temperature of the molten resin immediately before being extruded from the die 6 can be 142°C in a case where, for example, a polypropylene-based resin is used.

According to the production method in accordance with the present embodiment, cooling water is sprayed, with use of the mist nozzle 8, against the molten resin which has been cut with the cutter 7. In the granulating step, mixture mist M containing water and air is ejected toward the die openings 6b of the die 6, and a spray flow rate of the water by the mist nozzle 8 is 1 L/h to 9 L/h per nozzle. Therefore, the mist adheres to the surface of the expanded particles P immediately after being cut. By gasification of mist adhered to the surface of the expanded particles P, surface solidification of the expanded particles P is facilitated. Therefore, the expanded particles P do not adhere to each other.

The spray flow rate of water per nozzle is 1 L/h to 9 L/h, preferably 3 L/h to 9 L/h, more preferably 3 L/h to 6 L/h. If the spray flow rate is lower than 1 L/h, expanded particles would not be sufficiently cooled, and the expanded particles are more likely to adhere to each other. If the spray flow rate is greater than 9 L/h, the die 6 would be excessively cooled, and the die openings 6b are more likely to be blocked by the molten resin.

An average spray particle size of the water is preferably 40 µm or less, more preferably 35 µm or less. If the average spray particle size is greater than 40 µm, the die 6 is more likely to be cooled, and the die openings 6b are more likely to be clogged with the molten resin. Accordingly, efficiency of cooling expanded particles would be deteriorated, and thus the expanded particles are more likely to adhere to each other.

After the molten resin is cut with the cutter 7, expanded particles P are not released to water but are released into the cutter case 9 having an atmosphere at atmospheric pressure. Therefore, as compared with the UWC method, it is possible to produce the expanded particles P having the higher expanding ratio, i.e., 9 to 45 times.

The production method in accordance with the present embodiment preferably further includes: a collecting step of collecting the thermoplastic resin expanded particles which have been formed from the molten resin cut with the cutter, in the collecting step, the thermoplastic resin expanded particles immediately after being cut colliding with a surface that has been subjected to a non-bonding coating treatment.

With reference to Figs. 1 and 2, in the collecting step, the expanded particles P formed from the molten resin which has been cut with the cutter 7 are collected in the cutter case 9. Then, in the collecting step, the expanded particles P immediately after being cut collide with the coating layer 9b of the expanded particle collision region 9a1. The coating layer 9b is a layer formed as a result of applying a non-bonding coating treatment to the expanded particle collision region 9a1. This makes it possible to further prevent the expanded particles P from adhering to each other.

The present invention is not limited to the embodiments, but can be altered by a skilled person in the art within the scope of the claims. The present invention also encompasses, in its technical scope, any embodiment derived by combining technical means disclosed in differing embodiments. Further, it is possible to form a new technical feature by combining the technical means disclosed in the respective embodiments.

Aspects of the present invention can also be expressed as follows:
As described above, the production method in accordance with an aspect 1 of the present invention is a method for producing thermoplastic resin expanded particles, the method including: a melting and kneading step of melting and kneading a thermoplastic resin and a carbonic acid gas which serves as a blowing agent; and a granulating step of granulating thermoplastic resin expanded particles (expanded particles P) by a hot cutting method, in the hot cutting method, a molten resin that contains the thermoplastic resin and the blowing agent being extruded through a die hole (die openings 6b of die 6), the molten resin which is extruded through the die hole (die openings 6b of die 6) being cut with a cutter 7 in air, and the molten resin being cooled in air while being expanded or after being expanded, in the granulating step, mixture mist M containing water and air being sprayed toward the die hole (die openings 6b of die 6), and a spray flow rate of the water sprayed from a nozzle (mist nozzle 8) being 1 L/h to 9 L/h per nozzle.

The production method in accordance with an aspect 2 of the present invention further includes, in the aspect 1: a collecting step of collecting the thermoplastic resin expanded particles (expanded particles P) which have been formed from the molten resin cut with the cutter 7, in the collecting step, the thermoplastic resin expanded particles immediately after being cut colliding with a surface (coating layer 9b) that has been subjected to a non-bonding coating treatment.

In the production method in accordance with an aspect 3 of the present invention, in the aspect 1 or 2: in the granulating step, air or water is discharged from the cutter 7.

In the production method in accordance with an aspect 4 of the present invention, in the aspect 3, a linear speed of the air discharged from the cutter 7 is 25 m/sec or more.

In the production method in accordance with an aspect 5 of the present invention, in any of the aspects 1 through 4, an average spray particle size of the mixture mist M is 40 µm or less.

In the production method in accordance with an aspect 6 of the present invention, in any of the aspects 1 through 5, an expanding ratio of the thermoplastic resin expanded particles (expanded particles P) is 9 to 45 times.

In the production method in accordance with an aspect 7 of the present invention, in any of the aspects 1 through 5, an expanding ratio of the thermoplastic resin expanded particles (expanded particles P) is 15 to 45 times.

In the production method in accordance with an aspect 8 of the present invention, in any of the aspects 1 through 7, the thermoplastic resin expanded particles (expanded particles P) are constituted by a crystalline thermoplastic resin.

The production device 10 in accordance with an aspect 9 of the present invention is a production device 10 for producing thermoplastic resin expanded particles and is configured to include: an extruder 1 for melting and kneading a thermoplastic resin and a carbonic acid gas which serves as a blowing agent; a die 6 having a die hole (die openings 6b) through which a molten resin, which contains the thermoplastic resin and the blowing agent, passes when the molten resin is extruded from the extruder 1; and a granulation section A for granulating thermoplastic resin expanded particles (expanded particles P) by a hot cutting method, the granulation section A including a cutter 7 for cutting the molten resin, which has passed through the die hole (die openings 6b of die 6), in air, the production device 10 being provided with at least one spray opening 8a from which water is sprayed, and the spray opening 8a being provided so as to face the die hole (die openings 6b of die 6).

In the production device 10 in accordance with an aspect 10 of the present invention, in the aspect 9, the cutter 7 includes a discharge opening (air discharge opening 7b) through which air or water is discharged.

The production device 10 in accordance with an aspect 11 of the present invention further includes, in the aspect 9 or 10, a collection section (cutter case 9) for collecting the thermoplastic resin expanded particles (expanded particles P) which have been formed from the molten resin cut with the cutter 7, the collection section having a surface (expanded particle collision region 9a1) that has been subjected to a non-bonding coating treatment, and the thermoplastic resin expanded particles (expanded particles P) colliding with the surface at least immediately after being cut.

In the production device 10 in accordance with an aspect 12 of the present invention, in the aspect 11: the collection section is a cutter case 9 for accommodating the cutter 7; and the non-bonding coating treatment is applied to a sidewall surface 9a of the cutter case 9a.

### Examples

### (Example 1)

With use of the production device 10 illustrated in Figs. 1 and 2, expanded particles P were produced in accordance with the following production conditions.

### <Production conditions>

- Thermoplastic resin: polypropylene
- Amount of thermoplastic resin introduced: 1 kg/h
- Amount of carbonic acid gas (blowing agent) introduced: 5 parts by weight with respect to 100 parts by weight of thermoplastic resin
- Extruder 1: Twin screw extruder of ϕ15 mm
- Screw rotation speed of extruder 1: 150 rpm
- Temperature of extruder 1: 200°C
- Temperature of cooling section 5: 148°C
- Temperature of die 6: 142°C
- Cutter case 9: Sidewall surface 9a is provided with coating layer 9b of Teflon (registered trademark)
- Rotation speed of cutter 7: 1000 rpm
- Flow rate of mixture mist M: 4.2 L/h
- Method of spraying mixture mist M: Sprayed toward die 6
- Average particle size of mixture mist M: 30 µm
- Airflow rate from cutter blade 7a: 62.5 m/sec

As a result, an expanding ratio of the produced expanded particles P was 23.9 times. Moreover, a proportion of expanded particles which adhered to each other was 0%.

### (Comparative Example 1)

Expanded particles P ware produced with a method similar to <Production conditions> in Example 1, except that mixture mist M was not sprayed against the die 6. As a result, an expanding ratio of the produced expanded particles P was 21.2 times. Moreover, a proportion of expanded particles which adhered to each other was 6%.

### Reference Signs List

- 1:: Extruder
- 2:: Feeder
- 3:: Blowing agent (carbonic acid gas) introduction unit
- 4:: Transportation section
- 5:: Cooling section
- 6:: Die
- 6a:: Resin discharge surface
- 6b:: Die opening (die hole)
- 7:: Cutter
- 7b:: Air discharge opening
- 8:: Mist nozzle
- 8a:: Spray opening
- 9:: Cutter case (collection section)
- 9a1:: Expanded particle collision region (surface with which thermoplastic resin expanded particles collide)
- 9b:: Coating layer (non-bonding coating)
- 9c:: Outlet
- 10:: Production device
- A:: Granulation section
- M:: Mixture mist
- P:: Expanded particles

## Claims

1. A method for producing thermoplastic resin expanded particles, said method comprising:
a melting and kneading step of melting and kneading a thermoplastic resin and a carbonic acid gas which serves as a blowing agent; and
a granulating step of granulating thermoplastic resin expanded particles by a hot cutting method,
in the hot cutting method, a molten resin that contains the thermoplastic resin and the blowing agent being extruded through a die hole, the molten resin which is extruded through the die hole being cut with a cutter in air, and the molten resin being cooled in air while being expanded or after being expanded,
in the granulating step, mixture mist containing water and air being sprayed toward the die hole, and a spray flow rate of the water sprayed from a nozzle being 1 L/h to 9 L/h per nozzle.

2. The method as set forth in claim 1, further comprising:
a collecting step of collecting the thermoplastic resin expanded particles which have been formed from the molten resin cut with the cutter,
in the collecting step, the thermoplastic resin expanded particles immediately after being cut colliding with a surface that has been subjected to a non-bonding coating treatment.

3. The method as set forth in claim 1 or 2, wherein:
in the granulating step, air or water is discharged from the cutter.

4. The method as set forth in claim 3, wherein a linear speed of the air discharged from the cutter is 25 m/sec or more.

5. The method as set forth in any one of claims 1 through 4, wherein an average spray particle size of the mixture mist is 40 µm or less.

6. The method as set forth in any one of claims 1 through 5, wherein an expanding ratio of the thermoplastic resin expanded particles is 9 to 45 times.

7. The method as set forth in any one of claims 1 through 5, wherein an expanding ratio of the thermoplastic resin expanded particles is 15 to 45 times.

8. The method as set forth in any one of claims 1 through 7, wherein the thermoplastic resin expanded particles are constituted by a crystalline thermoplastic resin.

9. A production device for producing thermoplastic resin expanded particles, said production device comprising:
an extruder for melting and kneading a thermoplastic resin and a carbonic acid gas which serves as a blowing agent;
a die having a die hole through which a molten resin, which contains the thermoplastic resin and the blowing agent, passes when the molten resin is extruded from the extruder; and
a granulation section for granulating thermoplastic resin expanded particles by a hot cutting method, the granulation section including a cutter for cutting the molten resin, which has passed through the die hole, in air,
said production device being provided with at least one spray opening from which water is sprayed, and the spray opening being provided so as to face the die hole.

10. The production device as set forth in claim 9, wherein the cutter includes a discharge opening through which air or water is discharged.

11. The production device as set forth in claim 9 or 10, further comprising:
a collection section for collecting the thermoplastic resin expanded particles which have been formed from the molten resin cut with the cutter,
the collection section having a surface that has been subjected to a non-bonding coating treatment, and the thermoplastic resin expanded particles colliding with the surface at least immediately after being cut.

12. The production device as set forth in claim 11, wherein:
the collection section is a cutter case for accommodating the cutter; and
the non-bonding coating treatment is applied to a sidewall surface of the cutter case.
